# EUROPEAN PATENT SPECIFICATION

(11) **EP 3 315 687 B1**
(45) Date of publication and mention of the grant of the patent: **27.05.2020**
(21) Application number: 16196597.5
(22) Date of filing: 31.10.2016
(51) Int. Cl.: E04F 15/02, E04F 15/04, E04F 13/08, B32B 5/12, B32B 21/00

(54) **WOODEN FLOORING BOARD WITH A CONNECTION SYSTEM HAVING A PLYWOOD LAMELLA AND KIT OF BOARDS**
HOLZBODENBRETT MIT VERBINDUNGSSYSTEM MIT EINER SPERRHOLZLAMELLE UND SET VON BRETTER
PLANCHE DE PARQUET EN BOIS AVEC SYSTÈME DE CONNEXION PAR LAMELLE DE CONTRE-PLAQUÉ ET KIT DE PLANCHES

(43) Date of publication of application: 02.05.2018
(73) Proprietor: Tarkett GDL S.A., 9779 Lentzweiler (LU)
(72) Inventor: BLADH, Jonas, 9559 Wiltz (LU)
(74) Representative: Lavoix

(56) References cited:
- WO-A1-2009/014492
- WO-A1-2016/151435
- JP-U- H0 535 264
- US-A1- 2012 231 210
- US-A1- 2013 104 485
- US-A1- 2013 199 120

## Description

The present invention concerns a wooden flooring board according to the preamble of claim 1.

Such a board is known from WO2016/151435. WO2009/014492, US2013/199120, JP H05-35264, EP 1 437 457, JP 2001329681 and EP 0 236 283 disclose further wooden flooring boards.

However, the known wooden flooring boards do not provide full satisfaction.

Known flooring boards comprise interlocking means at their edges. A first pair of opposite edges is formed by wood having a fibre direction perpendicular to the edge and parallel to the flooring board plane. This first pair of opposite edges is easily machinable thanks to the direction of the wood fibres being perpendicular to the cutting direction of a cutting tool. The interlocking means obtained at this first pair of opposite edges show mechanical properties that are aligned with the requirements for standard interlocking means. A second pair of opposite edges, perpendicular to the first edges, is formed by wood fibres extending parallel to the second pair of opposite edges and parallel to the flooring board plane. The interlocking means obtained at this second pair of opposite edges show mechanical properties that are not aligned with the requirements of standard interlocking means..

Additionally, the core of the flooring board is usually made from joint wood lamellas made from soft wood, such as pine or spruce. The location of the joints of adjacent wood lamellas can be at the location of machining, which creates the risk of detaching a wood lamella from the rest of the core.

Therefore, when manufacturing a wooden flooring board, it is difficult to form the interlocking means arranged at least at a second edge, or transversal end of the wooden flooring board. Consequently, the interlocking means at the transversal end do not allow a precise interlocking with complementary interlocking means of an adjacent wooden flooring board.

Hence, it is an objective of the invention to provide a wooden flooring board which allows precisely formed interlocking means and thus a correct interlocking with an adjacent flooring board. Another objective of the invention is to allow an efficient manufacturing of the flooring board.

According to the invention, the above objective is achieved by a wooden flooring board comprising the features of claim 1.

According to preferred embodiments, the wooden flooring board may include one, several or all of the features of the dependent claims 2 to 12, in all technically feasible combinations.

The invention further relates to a kit of wooden flooring boards according to claim 13.

According to preferred embodiments, the kit of wooden flooring board can also include the features of claim14.

Exemplary embodiments of the invention will now be described in detail with reference to the drawings, wherein:
Figure 1 is a perspective view of a wooden flooring board according to the invention;
Figure 2 shows a cross section of a first connection means of a plywood structure of a wooden flooring board according to the invention;
Figure 3 shows a cross section of a third connection means of a plywood structure of a wooden flooring board according to the invention;
Figure 4 shows a kit of wooden flooring boards comprising wooden flooring boards according to the invention.

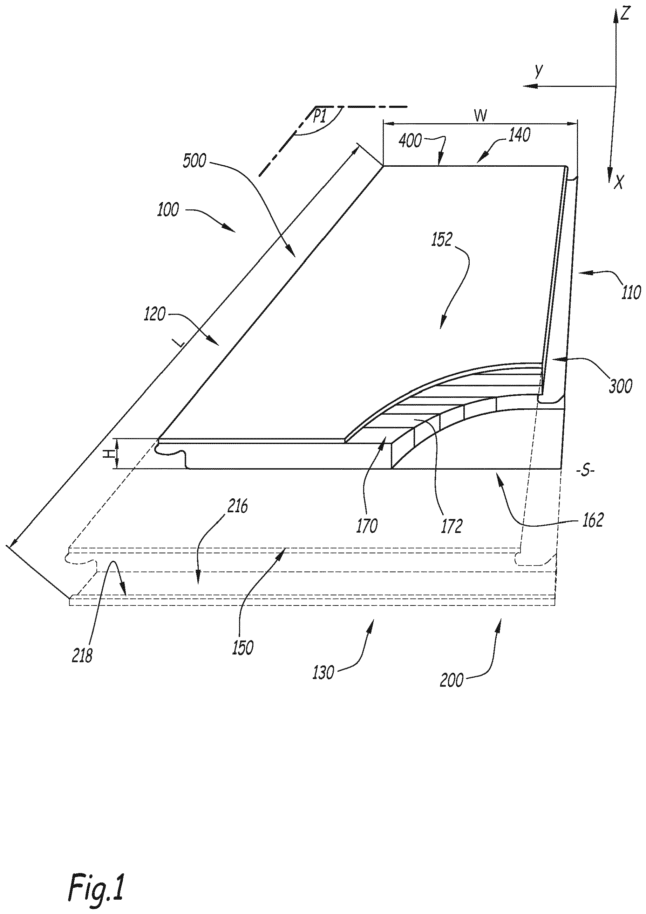

With reference to figure 1, there is shown a wooden flooring board 100. The right front corner of the wooden flooring board is shown broken away for better understanding. The wooden flooring board 100 is destined for covering a support surface S, for example a floor surface, a wall surface or a ceiling surface of a room.

In the following description the terms "top" and "bottom", "up" and "down" are defined according to a wooden flooring board mounted on the support surface S. In this case "top", "above", "upwards" and "up" designate a first direction substantially extending away from the support surface S, in particular a first direction perpendicular to a plane defined by the support surface S. "Below" and "down" designate a second direction substantially extending towards the support surface S, the second direction being extending opposite to the first direction.

The wooden flooring board 100 can be arranged on the support surface S in all commonly known ways.

The wooden flooring board 100 has a substantially parallelepiped shape.

The wooden flooring board 100 has a first longitudinal end 110 and a second longitudinal end 120 extending parallel to a longitudinal axis X of the wooden flooring board 100.

The first and second longitudinal ends 110, 120 of the wooden flooring board 100 each have a length L measured parallel to the longitudinal axis X, comprised between 80 mm and 2500 mm.

The wooden flooring board 100 has a first transversal end 130 and a second transversal end 140 extending parallel to a transversal axis Y of the wooden flooring board 100. The transversal axis Y is extending transversally to the longitudinal axis X and is preferably orthogonal to the longitudinal axis X.

The first transversal end 130 is shorter than the first longitudinal end 110.

The first and second transversal ends 130, 140 of the wooden flooring board 100 have a width W measured parallel to the transversal axis Y, comprised between 100 mm and 300 mm

The longitudinal axis X and the transversal axis Y span a plane P1.

The wooden flooring board 100 comprises first connection means 200 that are arranged at the first transversal end 130.

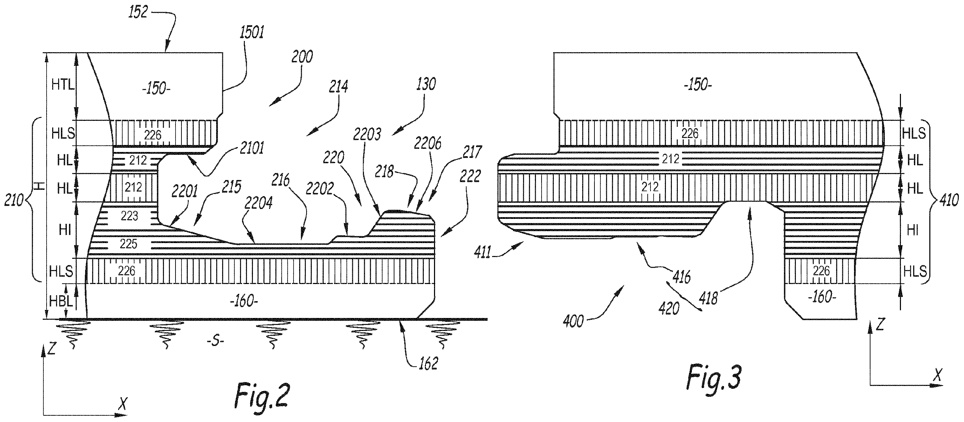

Figure 2 shows a cross section of the first connection means 200 taken along a plane perpendicular to transversal axis Y.

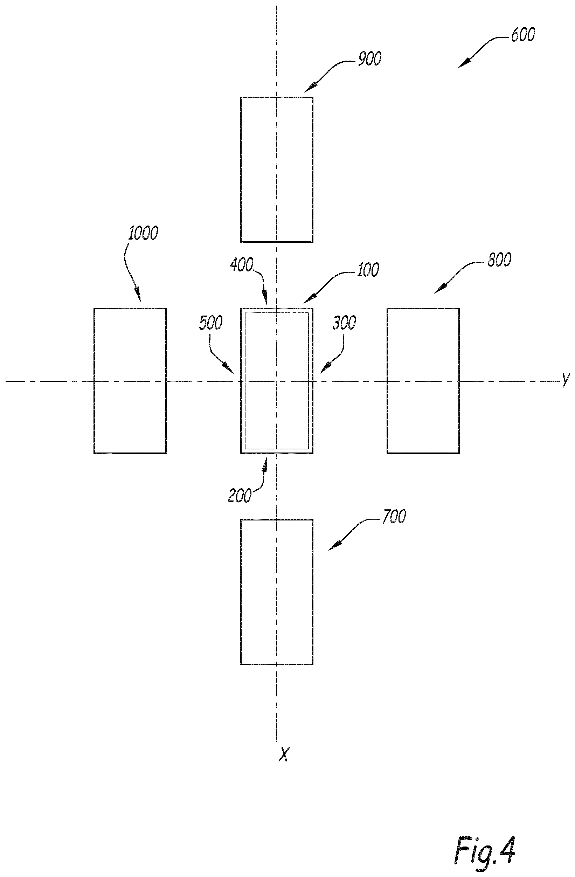

The first connection means 200 are adapted to connect the wooden flooring board 100 with another wooden flooring board (see figure 4).

The first connection means 200 comprise a first plywood structure 210. The plywood structure 210 is a profiled lamella extending along the transversal end 130.

The first plywood structure 210 comprises successive wood layers 212 superposed in a direction parallel to an azimuthal axis Z extending perpendicular to the plane P1.

Each wood layer 212 has a wood fibre direction extending substantially parallel to the plane P1. Each wood layer 212 has a thickness HL measured parallel to the azimuthal axis Z. The thickness HL of each wood layer 212 is comprised between 0,5 mm and 4 mm.

The term "wood fibre direction" of an element in this description defines the general or predominant direction in which the wood fibres of the element extend. However, an element with a given wood fibre direction may naturally have sections, for example knots, extending locally not generally parallel to the wood fibre direction. In view of this definition, the direction of wood fibres extending locally in a direction different than the wood fibre direction of the given element does not alter the defined wood fibre direction of the element.

Each of the successive wood layers 212 of the plywood structure 210 have a wood fibre direction different from the adjacent wood layers 212. The wood fibre directions of the adjacent successive wood layers 212 define an angle α of more than 45°, in particular an angle α of substantially 90°, or an angle of 90°

The plywood structure 210 comprises a connection groove 214. The connection groove 214 has a proximal transversal side 215 extending parallel to the transversal axis Y along the first transversal end 130 of the wooden flooring board 100, and a distal transversal side 217 extending parallel to the transversal axis Y along the first transversal end 130 of the wooden flooring board 100. The distal transversal side 217 defines a free edge of the wooden flooring board 100.

The connection groove 214 comprises a first recess 216 and a protrusion 218.

The first recess 216 and the protrusion 218 define a first interlocking surface 220. The first interlocking surface 220 is oriented upwards. In other words, the first interlocking surface 220 is visible when the wooden flooring board 100 is applied on a support surface S and in absence of an adjacent flooring board connected to the connection groove 214.

The first interlocking surface 220 is adapted for interlocking at least partially with an adjacent wooden flooring board.

The first interlocking surface 220 comprises a slanted contact surface 2201, a plateau contact surface 2202 and a steep contact surface 2203. Between the slanted contact surface 2201 and the plateau contact surface 2202 extends a non-contact surface 2204.

The slanted contact surface 2201 is inclined with respect to the longitudinal axis X and Z-axis, but parallel to the transversal axis Y. The plateau contact surface 2202 is parallel to plane P1. The steep contact surface 2203 extends parallel to the transversal axis Y, and is inclined with respect to plane P1 about an angle greater than the angle of inclination of the slanted contact surface 2201 with respect to this plane P1.

The wooden flooring board 100 has furthermore a decor contact surface 1501 defined by the decor layer 150. This decor contact surface 1501 extends perpendicular to the plane P1 and parallel to the Z-axis.

The wooden flooring board 100 comprises also a counter contact surface 2101 arranged in the plywood structure 210 and extending parallel to plane P1 and facing the slanted contact surface 2201. The above defined contact surfaces are the surfaces in contact with an adjacent flooring board when the two flooring boards are connected.

The protrusion 218 comprises also a non-contact surface 2206 adjacent the free edge of the wooden flooring board defined by the distal transversal side 217.

The plywood structure 210 comprises an interlocking layer 222 which forms the entire first interlocking surface 220. The interlocking layer 222 has a wood fibre direction which has a component parallel to the longitudinal axis X, and which is in particular parallel to the longitudinal axis X. Alternatively, the interlocking layer 222 has a wood fibre direction which has a component perpendicular to the longitudinal axis X and is perpendicular to the Z axis, and which is in particular perpendicular to the longitudinal axis X and perpendicular to the Z axis.

Generally, the interlocking layer 222 has a wood fibre direction being substantially different from the wood fibre direction of at least one wood layer (212, 226) adjacent to the interlocking surface.

The interlocking layer 222 is of greater thickness than the remaining successive wood layers 212. The interlocking layer 222 has a thickness HI measured parallel to the azimuthal axis Z. Preferably, the interlocking layer 222 has a thickness HI comprised between 1,5 and 2,5 times the thickness HL of each of the wood layers 212. Most preferably, the thickness HI is 2 times the thickness HL. The thickness HI is comprised between 1 mm and 8 mm,

The interlocking layer 222 is for example formed by two adjacent superposed partial interlocking layers 223, 225. The two superposed partial interlocking layers 223, 225 have both preferably an identical wood fibre direction. The interlocking layers 223 and 225 are fixed together in the same manner than the layers 212.

Each partial interlocking layer 223, 225 has a structure identical to the structure of the wood layers 212.

The interlocking layer 222 can be arranged below and/or above at least one wood layer 212 of the plywood structure 210. In particular, the interlocking layer 222 can be arranged below and above two wood layers 212 of the plywood structure 210, i.e. sandwiched between two wood layers 212. The wood layer(s) 212 adjacent to the interlocking layer 222 have a wood fibre direction different from the wood fibre direction of the interlocking layer 222. The wood layer 212 adjacent to the interlocking layer 222 has a wood fibre direction having a component parallel to the transversal axis Y or forms an angle of at most 15° with respect to the transversal axis Y. In particular, the wood fibre direction of the wood layer 212 adjacent to the interlocking layer 222 is parallel to the transversal axis Y.

The plywood structure 210 comprises at least one support layer 226. The support layer 226 is superposed and fixed e.g. by gluing to the interlocking layer 222.

The support layer 226 can have a thickness HLS inferior or equal to the thickness HL of the wood layer 212. The thickness HLS is comprised between 0,5 mm and 4 mm.

The support layer 226 has a wood fibre direction having a component oriented perpendicular to the wood fibre direction of the interlocking layer 222. In particular, the wood fibre direction of the support layer 226 has a component parallel to the transversal axis Y or forms an angle of at most 15° with respect to the transversal axis Y. In particular, the wood fibre direction of the support layer 226 is parallel to the transversal axis Y.

The support layer 226 is fixed to a fixation surface of the interlocking layer 222. The fixation surface is opposite to the first interlocking surface 220 of the interlocking layer 222.

The support layer 226 is comparable or identical to layers 212 with regard to thickness and/or material.

Alternatively, the plywood structure 210 does not comprise any support layers 226 and only comprises wood layers 212 and an interlocking layer 222. The support layers 226 are in this case replaced by wood layers 212.

Second connection means 300 are arranged at the first longitudinal end 110. The second connection means 300 allow connection of the wooden flooring board 100 with another wooden flooring board (see figure 4).

The second connection means 300 can have a second interlocking surface which is identical with the first interlocking surface 220 of the first connection means 200.

The wooden flooring board 100 has a decor layer 150 of hard wood. The decor layer 150 can be provided with a wear resistant layer comprising a polyurethane resin.

The decor layer 150 is for example formed out of oak wood.

The decor layer 150 has a thickness HTL comprised between 0.5 mm and 10 ... mm

The decor layer 150 has an upper surface 152 adapted to be visible once the wooden flooring board 100 is applied to the support surface S. The upper surface 152 is extending substantially parallel to the plane P1.

The wooden flooring board 100 has a balancing layer 160 of wood, in particular veneer.

The balancing layer 160 is for example formed out of soft wood, such as spruce or pine wood,

The balancing layer 160 has a thickness HBL comprised between 0.1 mm and 5 mm.

The balancing layer 160 forms a bottom surface 162 adapted to be hidden once the wooden flooring board 100 is applied on the support surface S. The bottom surface 162 is in contact with the support surface S when the wooden flooring board is applied on the support surface S. The bottom surface 162 is extending substantially parallel to the plane P1.

The top surface 152 and the bottom surface 162 are separated from each other by a height H measured parallel to the azimuthal axis Z.

The height H of the wooden flooring board is comprised between 8 mm and 30 mm, in particular comprised between 10 mm and 20 mm.

The plywood structure 210 is interposed between the decor layer 150 and the balancing layer160 and is fixed to these layers. This allows protection of the plywood structure, for example of wear and of forming a closed upper surface of the floor covering.

The wooden flooring board 100 comprises a core 170 arranged between the decor layer 150 and the balancing layer 160. Thus, the core 170 is protected of wear by the decor layer 150. The core 170 is made out of soft wood, preferably out of pine wood or spruce wood.

The core 170 comprises at least one wood lamella 172 and in particular a plurality of parallel wood lamellas arranged side-by-side. The or each wood lamella 172 has a wood fibre direction extending at most at an angle of 15° with respect to the transversal axis Y. In particular, the wood fibre direction of the wood lamella(s) 172 is parallel to the transversal axis Y.

The or each wood lamella 172 is preferably a one piece massive wood lamella.

The core 170 forms the second connection means 300. The second connection means 300 can be formed at least in part by the wood lamella(s) 172.

The core 170 is easily shapeable by wood cutting tools, for example a milling machine. As the wood fibre direction of the core 170 is generally parallel to the transversal axis Y, shaping of the second connection means 300 into the core 170 is easy and can be achieved with high precision.

Indeed, the direction of the wood fibres is perpendicular to the cutting direction of a cutting tool.

This means for example that after shaping the second interlocking surface of the second connection means 300, no wood fibres of the core 170 are sticking up. This allows a precise and stable interconnection of the second connection means 300 with an adjacent wooden flooring board.

A fourth connection means 500 can be formed at least in part by the core 170 respectively the wood lamella(s) 172.

Thus, the or each wood lamella(s) 172 extend(s) across the whole width of the flooring board 100 and forms at least part of the fourth connection means 500 and second connection means 300.

The wooden flooring board 100 comprises third connection means 400 arranged at the second transversal end 140 of the wooden flooring board. The third connection means 400 are adapted to receive a first connection means 200 of an adjacent wooden flooring board.

Figure 3 shows the third connection means 400 which comprise a second plywood structure 410.

The second plywood structure 410 has the same layer structure than the first plywood structure 210 and comprises for example successive wood layers 212.

In the following, only the differences of the second plywood structure 410 compared to the first plywood structure 210 are explained.

The second plywood structure 410 has a connection profile 411 having a nose 416 and a groove 418 which define a third interlocking surface 420 adapted to interlock with the first interlocking surface 220 of the first plywood structure 210 of a wooden flooring board. The wooden flooring board 100, at the second transversal end 140, has matching connection surfaces complementary to the connection surfaces 1501, 2101, 2201, 2202 and 2203. When two adjacent wooden flooring boards are connected, each time one of the matching connection surfaces is in contact with one of the connection surface 1501, 2101, 2201, 2202 and 2203.

The nose 416 is adapted to receive the recess 216 of the connection groove 214 of an adjacent wooden flooring board.

The groove 418 is adapted to receive the protrusion 218 of the connection groove 214 of an adjacent wooden flooring board.

The second plywood structure 410 is complementary to the first plywood structure 210. Therefore, precise interconnection of the first plywood structure 210 of a first wooden flooring board with the second plywood structure 410 of a second wooden flooring board is possible.

The wooden flooring board 100 has the fourth connection means 500 arranged at the second longitudinal end 120. The fourth connection means 500 allow interlocking of the wooden flooring board 100 with another wooden flooring board (see figure 4).

The fourth connection means 500 can have a fourth interlocking surface which has a cross section profile which is identical with the cross section profile of the third interlocking surface 420 of the third connection means 400.

The fourth connection means 500 are comprised by the core 170. The fourth connection means 500 can be formed at least in part by the wood lamella 172.

The fourth connection means 500 are complementary to the second connection means 300 and can receive the second connection means 300.

Therefore, precise interconnection of the fourth connection means 500 of a first wooden flooring board with the second connection means 300 of a second wooden flooring board is possible.

The invention also relates to a kit 600 of wooden flooring boards. The kit 600 comprises at least five identical wooden flooring boards, namely the first wooden flooring board 100, a second wooden flooring board 700, a third wooden flooring board 800, a fourth wooden flooring board 900 and a fifth wooden flooring board 1000.

The first wooden flooring board 100 of such a kit 600 can be interlocked with the four other wooden flooring boards of the kit 600.

The first connection means 200 of the first wooden flooring board 100 can be interlocked with a second wooden flooring board 700.

The second connection means 300 of the first wooden flooring board 100 can be interlocked a third wooden flooring board 800.

The third connection means 400 of the first wooden flooring board 100 can be interlocked with a fourth wooden flooring board 900.

The fourth connection means 500 of the first wooden flooring board 100 can be interlocked with a fifth wooden flooring board 1000.

In one alternative embodiment, the interlocking layer 222 is formed by a single Monobloc (not shown), or one-piece wood layer. The Monobloc is made out of the same material than the successive wood layers 212.

According to one embodiment technically combinable with the before described embodiments, multiple wood lamellas 172, having each wood fibres with a wood fibre direction substantially parallel to the transversal axis Y, form the core 170. The wood lamellas 172 are adjacent to each other.

According to an alternative embodiment, the support layer 226 is adjacent to the decor layer 150 and/or the balancing layer 160.

The first connection means 200, second connection means 300, third connection means 400 and fourth connection means 500 can also be named first connector, second connector, third connector and fourth connector.

## Claims

1. Wooden flooring board (100) for covering surfaces, in particular floor surfaces, the wooden flooring board (100) comprising
- a first longitudinal end (110) and a second longitudinal end (120) extending parallel to a longitudinal axis (X),
- a first transversal end (130) and a second transversal end (140) extending parallel to a transversal axis (Y) which extends transversal to the longitudinal axis (X),
- first connection means (200) arranged at the first transversal end (130) for connection of the wooden flooring board (100) with a flooring board, and
- second connection means (300) arranged at the first longitudinal end (110) for connection of the wooden flooring board (100) with a flooring board,
the first connection means (200) comprising a first plywood structure (210) comprising successive wood layers (212),
the first plywood structure (210) comprising a connection groove (214), the connection groove (214) comprising a first recess (216) and a protrusion (218) which define a first interlocking surface (220) being adapted for interlocking with an adjacent flooring board,
**characterized in that**
- the wood fibre direction of at least two successive wood layers (212) differs one from another of more than 45°, in particular substantially 90°, and **in that**
- the first plywood structure (210) comprises an interlocking layer (222) of greater thickness than the thickness of the remaining wood layers (212), the interlocking layer (222) forming the first interlocking surface (220) and having a wood fibre direction being substantially different from the wood fibre direction of at least a wood layer (212, 226) adjacent to the interlocking surface.

2. Wooden flooring board according to claim 1, wherein the interlocking layer (222) has a wood fibre direction substantially parallel to the longitudinal axis (X), in particular parallel to the longitudinal axis (X) or a wood fibre direction substantially perpendicular to the longitudinal axis (X), in particular perpendicular to the longitudinal axis.

3. Wooden flooring board according to claim 1 or 2, wherein the interlocking layer (222) is formed either of two superposed partial interlocking layers (223, 225) having an identical wood fibre direction and fixed together, or of a one-piece layer.

4. Wooden flooring board according to any one of the preceding claims, wherein the first plywood structure (210) comprises at least one support layer (226) or a wood layer (212) superposed and fixed to the interlocking layer (222), the support layer (226) or this wood layer (212) having a wood fibre direction having a component oriented perpendicular to the wood fibre direction of the interlocking layer (222).

5. Wooden flooring board according to any one of claims 1 to 4, wherein the flooring board comprises a decor layer (150) forming a top surface (152) of the wooden flooring board (100) and a balancing layer (160) forming a bottom surface (162) of the wooden flooring board (100), the top and bottom surfaces (152, 162) extending each parallel to a plane P1 defined by the longitudinal axis (X) and the transversal axis (Y), and wherein the first plywood structure (210) is interposed between the decor layer (150) and the balancing layer (160).

6. Wooden flooring board according to any of claims 1 to 5, wherein the wooden flooring board (100) comprises a core (170) comprising at least one wood lamella (172) having a wood fibre direction parallel to the transversal axis (Y).

7. Wooden flooring board according to any of claims 1 to 6, wherein the first interlocking surface (220) has a wood fibre direction having a component parallel to the transversal axis (Y), in particular parallel to the transversal axis (Y).

8. Wooden flooring board according to any of claims 1 to 7, wherein a third connection means (400) is arranged at the second transversal end (140) adapted to receive a first connection means (200) of an adjacent wooden flooring board.

9. Wooden flooring board according to any of claims 1 to 8, wherein a fourth connection means (500) are arranged at the second longitudinal end (120) adapted to receive a second connection means (300) of an adjacent wooden flooring board.

10. Wooden flooring board at least according to claim 6 and 9, wherein the second connection means (300), and eventually the fourth connection means (500), are formed at least in part by the wood lamella (172).

11. Wooden flooring board according to claim 10, wherein the third connection means (400) comprises a second plywood structure (410) comprising successive wood layers (212),
- the second plywood structure (410) comprising a connection profile (411)
having wood fibres extending in a direction having a component parallel to the longitudinal axis (X), in particular parallel to the longitudinal axis (X),
the connection profile (411) having a nose (416) and a groove (418) which define a third interlocking surface (420) being adapted for interlocking with the first interlocking surface (220) of a wooden flooring board,
the groove (418) being adapted to receive the protrusion (218) of the connection groove (214) of a wooden flooring board.

12. Wooden flooring board according to any of claims 1 to 11, wherein the first longitudinal end (110) is longer than the first transversal end (130).

13. Kit of wooden flooring boards wherein the kit (600) of wooden flooring boards comprises a first, second, third, fourth and fifth wooden flooring board (100, 700, 800, 900, 1000) according to any of claims 1 to 11 and adapted to be interlocked.

14. Kit of wooden flooring boards according to claim 13, wherein the first wooden flooring board (100) is adapted to be locked with its first connection means (200) to the second wooden flooring board (700), with its second connection means (300) to the third wooden flooring board (800), with its third connection means (400) to the fifth wooden flooring board (900) and with its fourth connection means (500) to the fourth wooden flooring board (1000).

## Patentansprüche

1. Hölzerne Fußbodenplatte (100) zum Bedecken von Oberflächen, insbesondere Fußbodenflächen, wobei die hölzerne Fußbodenplatte (100) Folgendes umfasst:
- ein erstes längslaufendes Ende (110) und ein zweites längslaufendes Ende (120), die sich parallel zu einer Längsachse (X) erstrecken,
- ein erstes querlaufendes Ende (130) und ein zweites querlaufendes Ende (140), die sich parallel zu einer Querachse (Y) erstrecken, welche sich quer zur Längsachse (X) erstreckt,
- erste Verbindungsmittel (200), die an dem ersten Querende (130) angeordnet sind, für das Verbinden der hölzernen Fußbodenplatte (100) mit einer Fußbodenplatte und
- zweite Verbindungsmittel (300), die an dem ersten längslaufenden Ende (110) angeordnet sind, für das Verbinden der hölzernen Fußbodenplatte (100) mit einer Fußbodenplatte,
wobei die ersten Verbindungsmittel (200) eine erste Sperrholzstruktur (210) umfassen, die aufeinanderfolgende Holzschichten (212) umfasst,
wobei die erste Sperrholzstruktur (210) eine Verbindungsrille (214) umfasst, wobei die Verbindungsrille (214) eine erste Vertiefung (216) und einen Vorsprung (218) umfasst, die eine erste Verblockungsfläche (220) definieren, die dafür eingerichtet ist, sich mit einer angrenzenden Fußbodenplatte zu verblocken,
**dadurch gekennzeichnet, dass**
- sich die Richtungen der Holfasern von mindestens zwei aufeinanderfolgenden Holzschichten (212) um mehr als 45° voneinander unterscheiden, insbesondere im Wesentlichen um 90°, und dadurch, dass
- die erste Sperrholzstruktur (210) eine Verblockungsschicht (222) mit größerer Dicke als die Dicken der restlichen Holzschichten (212) umfasst, wobei die Verblockungsschicht (222) die erste Verblockungsfläche (220) bildet und eine Richtung der Holzfasern aufweist, die sich im Wesentlichen von der Richtung der Holzfasern von mindestens einer Holzschicht (212, 226) unterscheidet, die an die Verblockungsfläche angrenzt.

2. Hölzerne Fußbodenplatte (100) nach Anspruch 1, wobei die Verblockungsschicht (222) eine Richtung der Holzfasern aufweist, die im Wesentlichen parallel zur Längsachse (X), insbesondere parallel zur Längsachse (X) liegt, und eine Richtung der Holzfasern, die im Wesentlichen senkrecht zur Längsachse (X), insbesondere senkrecht zur Längsachse liegt.

3. Hölzerne Fußbodenplatte nach Anspruch 1 oder 2, wobei die Verblockungsschicht (222) entweder aus zwei sich überlagernden Teilverblockungsschichten (223, 225), die eine identische Richtung der Holzfasern aufweisen und aneinander fixiert sind, oder aus einer einstückigen Schicht gebildet ist.

4. Hölzerne Fußbodenplatte nach einem der vorhergehenden Ansprüche, wobei die erste Sperrholzstruktur (210) mindestens eine Trägerschicht (226) oder eine Holzschicht (212) umfasst, die einander überlagern und an der Verblockungsschicht (222) fixiert sind, wobei die Trägerschicht (226) oder diese Holzschicht (212) eine Richtung der Holzfasern aufweist, die eine Komponente aufweist, die senkrecht zur Richtung der Holzfasern der Verblockungsschicht (222) ausgerichtet ist.

5. Hölzerne Fußbodenplatte nach einem der Ansprüche 1 bis 4, wobei die Fußbodenplatte eine Dekorschicht (150), die eine Oberseite (152) der hölzernen Fußbodenplatte (100) bildet, und eine Ausgleichsschicht (160), die eine Unterseite (162) der hölzernen Fußbodenplatte (100) bildet, umfasst, wobei sich die Ober- und die Unterseite (152, 162) jeweils parallel zu einer Ebene P1 erstrecken, die durch die Längsachse (X) und die Querachse (Y) definiert ist, und wobei die erste Sperrholzstruktur (210) zwischen der Dekorschicht (150) und der Ausgleichsschicht (160) eingefügt ist.

6. Hölzerne Fußbodenplatte nach einem der Ansprüche 1 bis 5, wobei die hölzerne Fußbodenplatte (100) einen Kern (170) umfasst, der mindestens eine Holzlamelle (172) umfasst, die eine Richtung der Holzfasern aufweist, die parallel zur Querachse (Y) liegt.

7. Hölzerne Fußbodenplatte nach einem der Ansprüche 1 bis 6, wobei die erste Verblockungsfläche (220) eine Richtung der Holzfasern aufweist, die eine Komponente aufweist, die parallel zur Querachse (Y), insbesondere parallel zur Querachse (Y), liegt.

8. Hölzerne Fußbodenplatte nach einem der Ansprüche 1 bis 7, wobei am zweiten querlaufenden Ende (140) ein drittes Verbindungsmittel (400) angeordnet ist, das dafür eingerichtet ist, ein erstes Verbindungsmittel (200) einer angrenzenden hölzernen Fußbodenplatte aufzunehmen.

9. Hölzerne Fußbodenplatte nach einem der Ansprüche 1 bis 8, wobei am zweiten längslaufenden Ende (120) ein viertes Verbindungsmittel (500) angeordnet ist, das dafür eingerichtet ist, ein zweites Verbindungsmittel (300) einer angrenzenden hölzernen Fußbodenplatte aufzunehmen.

10. Hölzerne Fußbodenplatte zumindest nach Anspruch 6 und 9, wobei das zweite Verbindungsmittel (300) und schließlich das vierte Verbindungsmittel (500) zumindest teilweise durch die Holzlamelle (172) gebildet sind.

11. Hölzerne Fußbodenplatte nach Anspruch 10, wobei das dritte Verbindungsmittel (400) eine zweite Sperrholzstruktur (410) umfasst, die aufeinanderfolgende Holzschichten (212) umfasst,
- wobei die zweite Sperrholzstruktur (410) ein Verbindungsprofil (411) umfasst, das Holzfasern aufweist, die sich in eine Richtung erstrecken, die eine Komponente aufweist, die parallel zur Längsachse (X), insbesondere parallel zur Längsachse (X), liegt,
wobei das Verbindungsprofil (411) eine Nase (416) und eine Rille (418) aufweist, die eine dritte Verblockungsfläche (420) bilden, die dafür eingerichtet ist, sich mit der ersten Verblockungsfläche (220) einer hölzernen Fußbodenplatte zu verblocken,
wobei die Rille (418) dafür eingerichtet ist, den Vorsprung (218) der Verbindungsrille (214) einer hölzernen Fußbodenplatte aufzunehmen.

12. Hölzerne Fußbodenplatte nach einem der Ansprüche 1 bis 11, wobei das erste längslaufende Ende (110) länger als das erste querlaufende Ende (130) ist.

13. Bausatz aus hölzernen Fußbodenplatten, wobei der Bausatz (600) aus hölzernen Fußbodenplatten eine erste, eine zweite, eine dritte, eine vierte und eine fünfte hölzerne Fußbodenplatte (100, 700, 800, 900, 1000) nach einem der Ansprüche 1 bis 11 umfasst, die dafür eingerichtet sind, miteinander verblockt zu werden.

14. Bausatz aus hölzernen Fußbodenplatten nach Anspruch 13, wobei die erste hölzerne Fußbodenplatte (100) dafür eingerichtet ist, mit ihrem ersten Verbindungsmittel (200) mit der zweiten hölzernen Fußbodenplatte (700) verblockt zu werden, mit ihrem zweiten Verbindungsmittel (300) mit der dritten hölzernen Fußbodenplatte (800) verblockt zu werden, mit ihrem dritten Verbindungsmittel (400) mit der fünften hölzernen Fußbodenplatte (900) verblockt zu werden und mit ihrem vierten Verbindungsmittel (500) mit der vierten hölzernen Fußbodenplatte (1000) verblockt zu werden.

## Revendications

1. Planche de parquet en bois (100) pour recouvrir des surfaces, en particulier des surfaces de sol, la planche de parquet en bois (100) comprenant
- une première extrémité longitudinale (110) et une seconde extrémité longitudinale (120) s'étendant parallèlement à un axe longitudinal (X),
- une première extrémité transversale (130) et une seconde extrémité transversale (140) s'étendant parallèlement à un axe transversal (Y) qui s'étend transversalement à l'axe longitudinal (X),
- un premier moyen de liaison (200) agencé au niveau de la première extrémité transversale (130) pour liaison de la planche de parquet en bois (100) avec une planche de parquet, et
- un deuxième moyen de liaison (300) agencé au niveau de la première extrémité longitudinale (110) pour liaison de la planche de parquet en bois (100) avec une planche de parquet,
le premier moyen de liaison (200) comprenant une première structure de contreplaqué (210) comprenant des couches de bois (212) successives,
la première structure de contre-plaqué (210) comprenant une rainure de liaison (214), la rainure de liaison (214) comprenant un premier renfoncement (216) et une saillie (218) qui définissent une première surface d'imbrication (220) étant adaptée pour s'imbriquer dans une planche de parquet adjacente,
**caractérisée en ce que**
- les directions de la fibre du bois d'au moins deux couches de bois (212) successives diffèrent l'une de l'autre de plus de 45°, en particulier sensiblement de 90°, et **en ce que**
- la première structure de contreplaqué (210) comprend une couche d'imbrication (222) d'une épaisseur supérieure à l'épaisseur des couches de bois (212) restantes, la couche d'imbrication (222) formant la première surface d'imbrication (220) et ayant une direction de la fibre du bois sensiblement différente de la direction de la fibre du bois d'au moins une couche de bois (212, 226) adjacente à la surface d'imbrication.

2. Planche de parquet en bois selon la revendication 1, dans laquelle la couche d'imbrication (222) a une direction de la fibre du bois sensiblement parallèle à l'axe longitudinal (X), en particulier parallèle à l'axe longitudinal (X) ou une direction de la fibre du bois sensiblement perpendiculaire à l'axe longitudinal (X), en particulier perpendiculaire à l'axe longitudinal.

3. Planche de parquet en bois selon la revendication 1 ou 2, dans laquelle la couche d'imbrication (222) est formée soit de deux couches d'imbrication partielles (223, 225) superposées ayant une direction identique de la fibre du bois et fixées l'une à l'autre, soit d'une couche d'un seul tenant.

4. Planche de parquet en bois selon l'une quelconque des revendications précédentes, dans laquelle la première structure de contre-plaqué (210) comprend au moins une couche de support (226) ou une couche de bois (212) superposée et fixée à la couche d'imbrication (222), la couche de support (226) ou ladite couche de bois (212) ayant une direction de la fibre du bois ayant une composante orientée perpendiculairement à la direction de la fibre de bois de la couche d'imbrication (222).

5. Planche de parquet en bois selon l'une quelconque des revendications 1 à 4, dans laquelle la planche de parquet comprend une couche de décoration (150) formant une surface supérieure (152) de la planche de parquet en bois (100) et une couche d'équilibrage (160) formant une surface inférieure (162) de la planche de parquet en bois (100), les surfaces supérieure et inférieure (152, 162) s'étendant chacune parallèlement à un plan P1 défini par l'axe longitudinal (X) et l'axe transversal (Y), et dans laquelle la première structure de contre-plaqué (210) est interposée entre la couche de décoration (150) et la couche d'équilibrage (160).

6. Planche de parquet en bois selon l'une quelconque des revendications 1 à 5, dans laquelle la planche de parquet en bois (100) comprend une âme (170) comprenant au moins une lamelle en bois (172) ayant une direction de la fibre de bois parallèle à l'axe transversal (Y).

7. Planche de parquet en bois selon l'une quelconque des revendications 1 à 6, dans laquelle la première surface d'imbrication (220) a une direction de la fibre de bois ayant une composante parallèle à l'axe transversal (Y), en particulier parallèle à l'axe transversal (Y).

8. Planche de parquet en bois selon l'une quelconque des revendications 1 à 7, dans laquelle un troisième moyen de liaison (400) est agencé au niveau de la seconde extrémité transversale (140) adaptée pour recevoir un premier moyen de liaison (200) d'une planche de parquet en bois adjacente.

9. Planche de parquet en bois selon l'une quelconque des revendications 1 à 8, dans laquelle un quatrième moyen de liaison (500) est agencé au niveau de la seconde extrémité longitudinale (120) adaptée pour recevoir un deuxième moyen de liaison (300) d'une planche de parquet en bois adjacente.

10. Planche de parquet en bois selon au moins la revendication 6 et 9, dans laquelle le deuxième moyen de liaison (300), et éventuellement le quatrième moyen de liaison (500), sont formés au moins en partie par la lamelle de bois (172).

11. Planche de parquet en bois selon la revendication 10, dans laquelle le troisième moyen de liaison (400) comprend une seconde structure de contre-plaqué (410) comprenant des couches de bois (212) successives,
- la seconde structure de contre-plaqué (410) comprenant un profilé de liaison (411) ayant des fibres de bois s'étendant dans une direction ayant une composante parallèle à l'axe longitudinal (X), en particulier parallèle à l'axe longitudinal (X),
le profilé de liaison (411) ayant un nez (416) et une rainure (418) qui définissent une troisième surface d'imbrication (420) étant adaptée pour s'imbriquer dans la première surface d'imbrication (220) d'une planche de parquet en bois,
la rainure (418) étant adaptée pour recevoir la saillie (218) de la rainure de liaison (214) d'une planche de parquet en bois.

12. Planche de parquet en bois selon l'une quelconque des revendications 1 à 11, dans laquelle la première extrémité longitudinale (110) est plus longue que la première extrémité transversale (130).

13. Kit de planches de parquet en bois, dans lequel le kit (600) de planches de parquet en bois comprend une première, une deuxième, une troisième, une quatrième et une cinquième planche de parquet en bois (100, 700, 800, 900, 1000) selon l'une quelconque des revendications 1 à 11 et adaptées pour être imbriquées.

14. Kit de planches de plancher en bois selon la revendication 13, dans lequel la première planche de parquet en bois (100) est adaptée pour s'imbriquer avec son premier moyen de liaison (200) dans la deuxième planche de paquet en bois (700), avec son deuxième moyen de liaison (300) dans la troisième planche de parquet en bois (800), avec son troisième moyen de liaison (400) dans la cinquième planche de parquet en bois (900) et avec son quatrième moyen de liaison (500) dans la quatrième planche de parquet en bois (1000).
